# EUROPÄISCHE PATENTSCHRIFT

(11) **EP 1 717 070 B1**
(45) Veröffentlichungstag und Bekanntmachung des Hinweises auf die Patenterteilung: **16.06.2010**
(21) Anmeldenummer: 06007106.5
(22) Anmeldetag: 04.04.2006
(51) Int. Cl.: B60H 1/00, B60H 3/06

(54) **Lüftungsvorrichtung, insbesondere für ein Kraftfahrzeug**
Ventilation device, in particular for a motor vehicle
Dispositif de ventilation, en particulier pour un véhicule à moteur

(30) Priorität: 27.04.2005 DE 102005019912
(43) Veröffentlichungstag der Anmeldung: 02.11.2006
(73) Patentinhaber: Behr GmbH & Co. KG, 70469 Stuttgart (DE)
(72) Erfinder: Komowski, Michael, 71263 Weil der Stadt (DE)

(56) Entgegenhaltungen:
- DE-A1- 10 131 121
- DE-A1- 19 817 896
- DE-U1- 9 216 412

## Beschreibung

Die Erfindung betrifft eine Lüftungsvorrichtung gemäß dem Oberbegriff des Anspruchs 1.

Aus der DE 92 16 412 U1 ist eine Lüftungsvorrichtung in einer Heiz- und/oder Klimaanlage von Kraftfahrzeugen bekannt, mit einem Frischluft- und einem Umluftkanal, von denen wechselweise durch Verschwenken einer Steuerklappe zwischen zwei Endstellungen gegenüber einer Einström-Öffnung eines Spiralgehäuses eines Radialventilators der eine dadurch versperrbar und der andere dadurch freigebbar ist, wobei die Steuerklappe als nach außen gewölbte Teilschale ausgebildet ist, die in den Endstellungen mit ihren Schalenrändem im Bereich des jeweiligen zu verschließenden Luftkanals an den entsprechenden Begrenzungswandungen dieses Luftkanals dicht anliegt und in deren Innenraum sich ein Laufrad des Radialventilators antreibender, axial vorgelagerter Elektromotor erstreckt. Hierbei ist der Radialventilator mittig zwischen zwei derartigen Steuerklappen angeordnet, wobei die Steuerklappen parallele Achsen aufweisen und gegenläufig betätigt werden. Das Anströmen von Frisch- und Umluft erfolgt aus entgegengesetzten Richtungen, wobei jeweils eine Umlenkung um 90° in das Spiralgehäuse hinein erfolgt. Eine derartige Lüftungsvorrichtung lässt jedoch noch Wünsche offen.

Eine nicht symmetrisch zur Längsachse ausgebildete Luftklappe, die in einer derartigen Lüftungsvorrichtung verwendet werden kann, ist beispielsweise in der DE 100 53 814 A1 beschrieben.

Aus der EP 0578 582 B1 ist eine Vorrichtung für die Heizung, Lüftung und/oder Klimatisierung eines Fahrzeuginnenraums bekannt, mit einem Luftgebläse, welches von Flügelklappen geregelt Luft aus dem Fahrzeuginnenraum und/oder von der Umgebung ansaugt. Hierbei sind Luftgebläse und ein Verteiler, welcher einen Wärmetauscher für die Erwärmung der in den Verteiler eingelassenen Luft enthält und mit Luftauslässen versehen ist, um Kalt- oder Warmluft in verschiedene Bereiche des Fahrzeuginnenraums einzuleiten, vertikal übereinander angeordnet, wobei ein Luftzuführkanal vorgesehen ist, der sich in einer in etwa vertikalen Richtung erstreckt und im oberen Bereich mit einer Öffnung für die Zufuhr von Luft aus der Umgebung und im unteren Bereich mit dem Lufteinlass des Luftgebläses verbunden ist. Ferner sind gemäß einer Ausführungsform zwei Umlufteinlässe vorgesehen, welche von der Seite her in den Luftzuführkanal einmünden, geregelt von zwei Flügelklappen, deren Schwenkachsen auf der Luftkanalaußenseite oberhalb der Umlufteinlässe angeordnet sind.

Aus der DE 198 17 896 A1, der den nächstliegenden Stand der Technik darstellt, ist weiterhin eine Lüftungsvorrichtung nach allen Merkmalen des Oberbegriffs des unabhängigen Anspruchs 1 bekannt.

Es ist Aufgabe der Erfindung, eine verbesserte Lüftungsvorrichtung zur Verfügung zu steilen.

Diese Aufgabe wird gelöst durch eine Lüftungsvorrichtung mit den Merkmalen des Anspruchs 1. Vorteilhafte Ausgestaltungen sind Gegenstand der Unteransprüche.

Die erfindungsgemäße Lüftungsvorrichtung ist mit mindestens einem Ansauggebläse vorgesehen, mindestens zwei durch mindestens eine gemeinsame Luftklappe geregelte Luftkanäle, durch die Luft, insbesondere Frischluft und/oder Umluft, zum Ansauggebläse gelangen kann, und mindestens einem zwischen Luftklappen und Ansauggebläse angeordneten Filter, wobei zwei Luftklappen vorgesehen sind, welche bevorzugt die Luftströmungen aus drei Luftkanäle regeln, die Schwenkachsen der Luftklappen benachbart und parallel zur Lufteintrittsfläche des Filters und parallel zueinander angeordnet sind, und sich die Luftklappen sich von deren Schwenkachsen aus zumindest bereichsweise in Richtung der Luftkanäle erstrecken. Diese Anordnung des Filters ist insbesondere bei Lkws besonders vorteilhaft, da hierbei häufig das Ansauggebläse zwischen die Stirnwand und Fronthaube des Fahrzeugs angeordnet wird, was häufig zu konstruktiven Problemen führt, die die Lüftungsvorrichtung verteuern. Durch die Anordnung von genau einem Filter, der vor dem Ansauggebläse angeordnet ist, kann die Zahl der Filter minimiert werden. Zudem können durch entsprechende Anordnung und Ausgestaltung der Luftklappe(n) auch in diesem Hinblick die Kosten minimiert werden. Bevorzugt ist der Strömungsquerschnitt im Bereich des Filters (und des anschließenden Bereichs) größer als der freie Strömungsquerschnitt der zuführenden Luftkanäle, wenn die Luftklappen einen oder mehrere der Luftkanäle vollständig verschließen.

Bei den Luftklappen handelt es sich bevorzugt um Zylinderklappen oder entsprechende Klappen mit einem zumindest bereichsweise bogenförmigen Querschnitt senkrecht zur Schwenkachse. Diese Luftklappen sind besonders gut für eine Regelung zweier Luftströme, die aus unterschiedlichen Richtungen kommen, geeignet, wobei sie die Luftströme optimal umlenken und auf einen breiteren Strömungsquerschnitt verteilen. Dabei können die Klappen auf einer oder beiden Seiten, insbesondere bevorzugt jedoch auf der Seite, die benachbart der anderen Klappe ist, einen nach außen überstehenden Rand oder Schenkel aufweisen, welcher die Klappenfläche vergrößert, welches besonders vorteilhaft in Verbindung mit einer Querschnittsvergrößerung der Luftkanäle im entsprechenden Bereich ist. Der Rand oder Schenkel erstreckt sich vorzugsweise in radialer Richtung nach außen.

Besonders bevorzugt ist ein Rand auf der Klappenseite angeordnet, die benachbart zur anderen Klappe ist. Sind auf beiden Klappenseiten Ränder ausgebildet, so ist der Rand auf der Klappenseite, die benachbart zur anderen Klappe ist, bevorzugt größer ausgebildet. Andere Ausgestaltungen sind jedoch auch möglich.

Ferner kann eine asymmetrische Ausgestaltung der einzelnen Klappen aus akustischen Gründen sinnvoll sein. Eine asymmetrische Ausgestaltung eignet sich auch für schmale Bauräume, da die Luftklappen in der Breite auch sehr klein sein können.

Die einzelnen Klappen können auch unterschiedlich ausgebildet sein, bspw. können die Ränder oder Schenkel unterschiedlich lang ausgebildet sein, um eine optimale Anpassung an die gegebenen Bauraurnverhältnisse und Luftkanalabmessungen, insbesondere der Seitenkanäle, zu ermöglichen.

Bevorzugt sind genau zwei Luftklappen vorgesehen, wobei in besonders bevorzugter Ausführung die Lüftungsvorrichtung spiegelbildlich bezüglich einer Mittelebene ausgebildet ist, d.h. die beiden Klappen sind in diesem besonders bevorzugten Fall auch spiegelbildlich bezüglich der Mittelebene ausgebildet.

Die Filterlänge entspricht vorzugsweise der Länge beider Luftklappen (einschließlich eines ggf. vorhandenen, nach außen, insbesondere in radialer Richtung überstehenden Randes oder Schenkels) auf der Seite, die benachbart sind zum Filter, in der Stellung, in welcher die beiden Luftklappen am weitesten voneinander beabstandet angeordnet sind, zuzüglich dem Abstand der Schwenkachsen der Luftklappen +/- 10%, insbesondere +/- 5% und im Idealfall annähernd exakt, so dass die gesamte Filterlänge ohne besondere Umlenk- oder Abdeckmaßnahmen möglichst gleichmäßig durchströmt wird und somit vollständig ausgenutzt werden kann.

Die beiden Luftklappen regeln erfindungsgemäß die Luftströme durch drei Luftkanäle, wobei die Luftströmung durch zwei der Luftkanäle, vorzugsweise der Umluftkanäle, einander entgegengerichtet ist, und die Luftströmung durch den dritten der Luftkanäle, vorzugsweise dem Frischluftkanal, senkrecht hierzu gerichtet ist. Es ist jedoch bei einem kurzen Frischluftkanal auch eine Anordnung vorteilhaft, gemäß der die Frischluft durch die seitlichen Kanäle und die Umluft über den mittleren Luftkanal zugeführt wird, so dass Spritzwasser nicht in die Lüftungsvorrichtung gelangen kann.

Im Folgenden wird die Erfindung anhand eines Ausführungsbeispiels unter Bezugnahme auf die Zeichnung im Einzelnen erläutert. In der Zeichnung zeigen:
- Fig. 1: eine perspektivische Ansicht einer Lüftungsvorrichtung gemäß dem Ausführungsbeispiel,
- Fig. 2: eine geschnittene Ansicht der Lüftungsvorrichtung von Fig. 1 mit Fig. 1 entsprechenden Klappenstellungen (Frischluftstellung),
- Fig. 3: eine geschnittene Ansicht der Lüftungsvorrichtung von Fig. 1, bei der die Luftklappen in der Umluftstellung sind,
- Fig. 4: eine geschnittene Ansicht einer ersten Variante der Lüftungsvorrichtung, bei der die Luftklappen in der Frischluftstellung durchgezogen und in der Umluftstellung gestrichelt dargestellt sind, und
- Fig. 5: eine geschnittene Ansicht einer zweiten Variante der Lüftungsvorrichtung mit Darstellung der Luftklappen entsprechend Fig. 4.

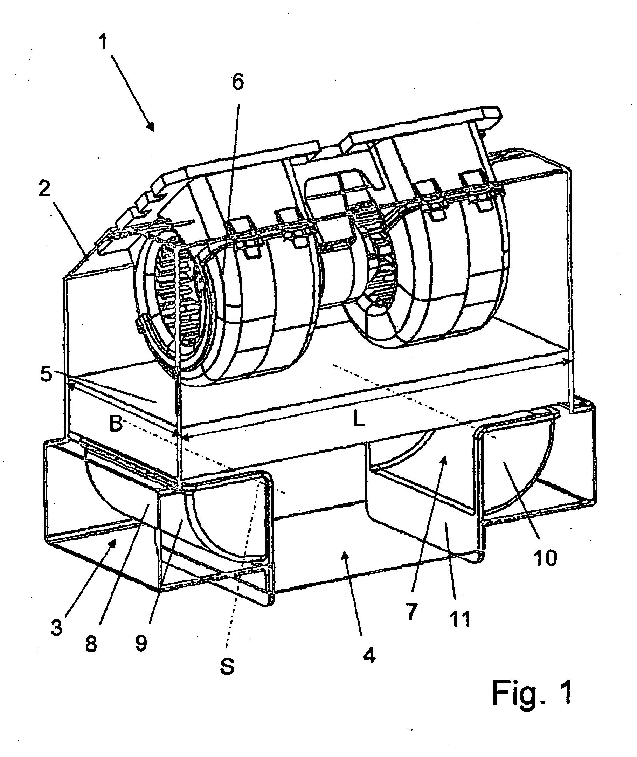

Im Folgenden wird unter Bezugnahme auf die Figuren 1 bis 3 eine erfindungsgemäße Lüftungsvorrichtung 1 für einen Lkw näher beschrieben, die zwischen der Stimwand und der Fronthaube des Fahrzeugs angeordnet ist, wo die Lüftungsvorrichtung 1 relativ einfach zugänglich ist, so dass Austauscharbeiten schnell durchführbar sind.

Die Lüftungsvorrichtung 1 weist ein Gehäuse 2 auf, welches zwei gebläseseitige Enden von Umluftkanälen 3 und ein gebläseseitiges Ende eines kurzen Frischluftkanals 4 bildet, und einen Filter 5 und zwei Ansauggebläse 6 mitsamt deren Spiralgehäuse, Laufrädern und deren mittig zwischen denselben angeordneten elektrischen Antriebsmotor aufnimmt. Im Gehäuse 2 sind femer in einem gemeinsamen Endbereich 7 der Umluftkanäle 3 und des Frischluftkanals 4 zwei als Zylinderklappen ausgebildete Luftklappen 8 vorgesehen.

Die Luftklappen 8 weisen eine viertels-hahlzylindrisch ausgebildete Absperrfläche 9, zwei senkrecht zur Schwenkachse an den jeweiligen Enden der Absperrfläche 9 angeordnete Seitenwände 10 und an beiden parallel zur Schwenkachse S verlaufenen Enden der Absperrfläche 9 einen in radialer Richtung nach außen überstehenden Rand 11 auf, der sich auch nach außen erstreckend über die Seitenwände 10 hinzieht (siehe Fig. 1). Der Rand 11 ist vorliegend auf der einander zugewandten Seite der beiden Luftklappen 8 verbreitert ausgebildet, so dass bei beschränkter Bauraumhöhe in Richtung der Umluftkanalhöhe und relativ großer Frischluftkanalbreite, verbunden mit einer relativ großen Filterlänge L

Prinzipiell sind beliebige Klappenformen möglich, beispielsweise auch solche, wie in der DE 100 53 814 A1 beschrieben sind, jedoch vorzugsweise aber nicht notwendigerweise ohne Luftleitelement.

Die Schwenkachsen S der Luftklappen 8 sind gemäß dem Ausführungsbeispiel parallel zueinander angeordnet, wobei jede Schwenkachse S vorliegend etwa mittig bezüglich des nachfolgend angeordneten Ansauggebläses 2 angeordnet ist. Um eine optimale Strömungsverteilung auf den nachfolgenden Filter 5 zu ermöglichen, ist bei den Luftklappen 8, welche eine Absperrfläche 9 in Form eines 90°-Abschnitts eines Hohlzylinders aufweisen, und bei einem Winkel des Umluftkanals 3 zum Frischluftkanal 4 von 90° sowie einer Klappen-Schwenkbewegung von ca. 90°, die Schwenkachse S jeweils etwa in Verlängerung der seitlichen Wand des Frischluftkanals 4 angeordnet.

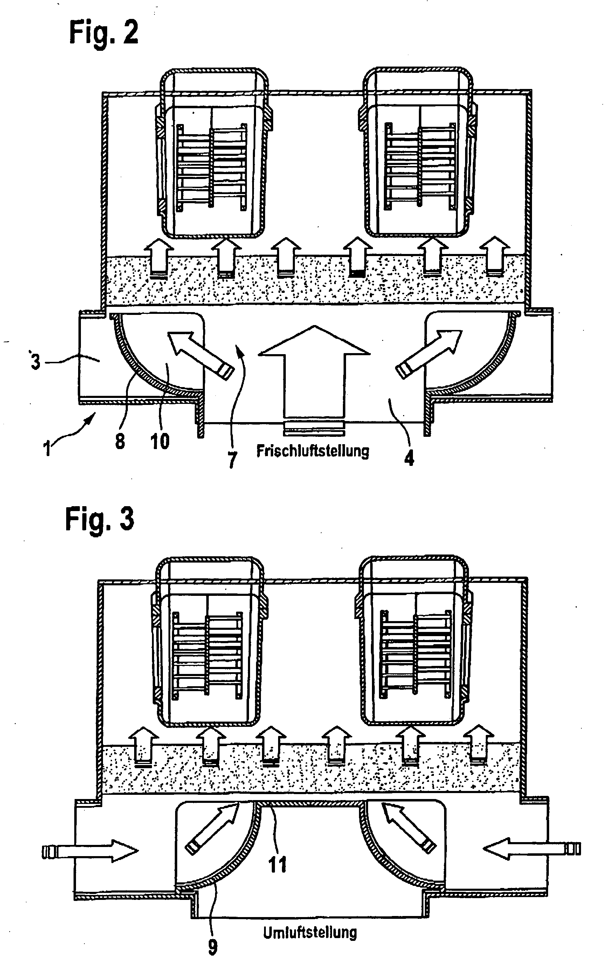

Die Luftklappen 8 verschließen in ihrer einen Endstellung je einen der Umluftkanäle 3 vollständig (vgl. Fig. 1 und Fig. 2) und dadurch im Wesentlichen den gesamten gemeinsamen Endbereich 7, der durch den Frischluftkanal 4 vom Ansauggebläse 6 angesaugten Luft durchströmt wird und durch den Filter 5 auf Grund der inneren Klappenform gleichmäßig verteilt über die gesamte Filterlänge L und Filterbreite B durch den Filter 5 strömt.

In der anderen Endstellung, die in Fig. 3 dargestellt ist, verschließen die beiden Luftklappen 8 dank des verbreitert ausgebildeten Randes 11 gemeinsam den Frischluftkanal 4. Vorliegend sind die Randenden auf Stoß angeordnet, jedoch sind auch andere, beispielsweise überlappende Anordnungen möglich oder es kann ein Steg im Luftkanal vorgesehen sein, an dem die Ränder anliegen. An den Rändern können ferner zusätzliche Dichtelemente, wie beispielsweise Dichtlippen, für eine verbesserte Abdichtung gegenüber den Anlageflächen vorgesehen sein. Ebenfalls ist eine weichere Ausgestaltung der Ränder zumindest in den äußersten Endbereichen denkbar. Eine entsprechendende abdichtende Ausgestaltung kann natürlich über den gesamten Randbereich der Luftklappe vorgesehen sein.

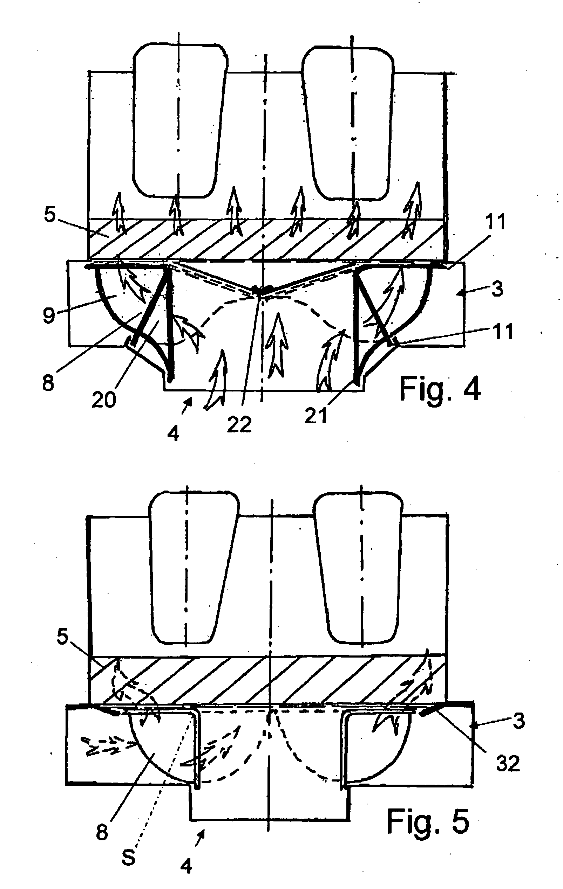

Gemäß der ersten Variante, die in Fig. 4 dargestellt ist, ist die Luftklappe 8 asymmetrisch ausgebildet, wobei die Luftklappe in einem ca. 70°-Winkel eine hohlzylindrische Absperrfläche 9 entsprechendend dem ersten Ausführungsbeispiel aufweist, die an beiden Enden einen Rand 11 aufweist, jedoch ist auf der der anderen Luftklappe 8 zugewandten Seite ein schirmartig überstehender Bereich 20 vorgesehen, der ebenfalls durch einen Rand 21 abgeschlossen ist. Sowohl für den Rand 11 als auch den Rand 21 sind am Gehäuse in den Endbereichen der Luftkanäle 3 und 4, wie aus der Darstellung von Fig. 4 ersichtlich ist, entsprechende Anlageflächen ausgebildet, um in den Klappenendstellungen ein ausreichendes Abdichten zu ermöglichen.

In der Mitte zwischen den beiden Luftklappen 8 ist zur verbesserten Abdichtung und als Endanschlag ein V-förmig ausgebildeter Steg 22 angeordnet, an welchem die Ränder 21 der Luftklappe 8 im Umluftbetrieb anliegen.

In Folge der schirmartigen Ausgestaltung der Luftklappe 8 kann bei relativ geringer Umluftkanalhöhe und relativ großer Filterbreite auf relativ einfache Weise und bei einem für beide Endstellungen optimierten Strömungsverlauf eine dem zuvor beschriebenen Ausführungsbeispiel entsprechende Klappenanordnung vorgesehen werden.

Gemäß der in Fig. 5 dargestellten zweiten Variante sind die Luftklappen 8 nicht nur spiegelbildlich zu einer Ebene ausgebildet, die parallel zur Blattebene der Darstellung von Fig. 5 ist, sondem auch spiegelbildlich zu einer Ebene, die in radialer Richtung der Schwenkachse S quer durch die Luftklappe 8 verläuft. Somit kann auf beiden Seiten die gleiche Luftklappe 8 verwendet werden, wodurch die Anzahl unterschiedlicher Teile verringert werden kann. Um jedoch die unterschiedlichen Filterlängen L und der entsprechenden Abmessungen der Luftklappen auf Grund der Begrenzung der Bauraumhöhe seitens der Luftklappen auszugleichen, ist vorliegend ein Zwischenstück 32 am Umluftkanalende vorgesehen, welches den Zwischenraum zwischen Luftklappe und filterseitigem Ende des Umluftkanals abdeckt, so dass bei Frischluftbetrieb keine Umluft durch den Zwischenraum gelangen kann. Die Luftverteilung auf den Filter ist etwas ungleichmäßiger, insbesondere in den äußeren Endbereichen, jedoch ist eine einfachere Anpassung an unterschiedliche Filterbreiten möglich.

## Patentansprüche

1. Lüftungsvorrichtung mit mindestens einem Ansauggebläse (6), mindestens zwei durch mindestens eine gemeinsame Luftklappe (8) geregelte Luftkanäle (3, 4), durch die Luft, insbesondere Frischluft und/oder Umluft, zum Ansauggebläse (6) gelangen kann, und mindestens einem zwischen Luftklappe (8) und Ansauggebläse (6) angeordneten Filter (5), wobei zwei Luftklappen (8) vorgesehen sind, deren Schwenkachsen (S) parallel zueinander und benachbart und parallel zur Lufteintrittsfläche des Filters (5) angeordnet sind, wobei sich die Luftklappen (8) sich von deren Schwenkachsen (S) aus zumindest, bereichsweise in Richtung der Luftkanäle (3, 4) erstrecken und die beiden Luftklappen (8) die Luftströme durch drei Luftkanäle (3, 4) regeln, wobei die Luftströmung durch zwei der Luftkanäle (3) einander entgegengerichtet ist, und die Luftströmung durch den dritten der Luftkanäle (4) senkrecht hierzu gerichtet ist, **dadurch gekennzeichnet, dass** die Luftklappen (8) eine Absperrfläche (9) in Form eines 90°-Abschnitts eines Hohlzylinders aufweisen.

2. Lüftungsvorrichtung nach Anspruch 1, **dadurch gekennzeichnet, dass** mindestens eine der Luftklappen (8) im Querschnitt senkrecht zur Schwenkachse (S) bogenförmig ausgebildet ist.

3. Lüftungsvorrichtung nach Anspruch 2, **dadurch gekennzeichnet, dass** die Luftklappe (8) im Querschnitt senkrecht zur Schwenkachse (S) kreisbogenabschnittsförmig ausgebildet ist.

4. Lüftungsvorrichtung nach einem der vorhergehenden Ansprüche, **dadurch gekennzeichnet, dass** mindestens eine der Luftklappen (8) mindestens einen Rand (11, 21) aufweist, der sich nach außen erstreckt.

5. Lüftungsvorrichtung nach Anspruch 4, **dadurch gekennzeichnet, dass** der Rand (11, 21) sich in radialer Richtung nach außen erstreckt.

6. Lüftungsvorrichtung nach Anspruch 4 oder 5, **dadurch gekennzeichnet, dass** der Rand (11, 21) auf der Seite, welche zur zweiten Luftklappe (8) weist, vorgesehen ist.

7. Lüftungsvorrichtung nach einem der vorhergehenden Ansprüche, **dadurch gekennzeichnet, dass** die Lüftungsvorrichtung (1) spiegelbildlich bezüglich einer Mittelebene ausgebildet ist.

8. Lüftungsvorrichtung nach einem der vorhergehenden Ansprüche, **dadurch gekennzeichnet, dass** die Filterlänge (L) der Länge beider Luftklappen (8) auf der Seite, die benachbart sind zum Filter (5), in der Stellung, in welcher die beiden Luftklappen (8) am weitesten voneinander beabstandet angeordnet sind, zuzüglich dem Abstand der Schwenkachsen (S) der beiden Luftklappen (8) voneinander +/- 10%, insbesondere +/- 5%, entspricht.

9. Lüftungsvorrichtung nach einem der vorhergehenden Ansprüche, **dadurch gekennzeichnet, dass** der dritte Luftkanal (4), der senkrecht zu den beiden anderen Luftkanälen (3) gerichtet ist, ein Frischluftkanal ist, und die beiden anderen Luftkanäle (3) Umluftkanäle sind, oder dass der dritte Luftkanal, der senkrecht zu den beiden anderen Luftkanälen gerichtet ist, ein Umluftkanal ist, und die beiden anderen Luftkanäle (3) Frischluftkanäle sind.

10. Lüftungsvorrichtung nach einem der vorhergehenden Ansprüche, **dadurch gekennzeichnet, dass** ein parallel zu den Schwenkachsen (S) und in der Mittelebene zwischen denselben verlaufender Steg (22) oder eine Zwischenstück (32) für eine Anlage eines Randes (11, 21) der Luftklappe (8) vorgesehen ist.

11. Lüftungsvorrichtung nach einem der vorhergehenden Ansprüche, **dadurch gekennzeichnet, dass** mindestens eine der Luftklappen (8) sowohl spiegelbildlich zur Mittelquerebene als auch senkrecht zu einer Mittelebene, die entlang der Schwenkachse (S) verläuft, ausgebildet ist.

## Claims

1. A ventilation device, comprising at least one intake fan (6), at least two air ducts (3, 4) which are regulated by at least one common air flap (8) and through which air, in particular fresh air and/or recirculated air, can reach the intake fan (6), and comprising at least one filter (5) arranged between the air flap (8) and the intake fan (6), two air flaps (8) being provided, the pivot axes (S) of which are arranged parallel to each other and adjacent and parallel to the air inlet surface of the filter (5), the air flaps (8) extending from the pivot axes (S) thereof in the direction of the air ducts (3, 4) at least in some regions, and the two air flaps (8) regulating the air flows by way of three air ducts (3, 4), the air flow being directed toward each other by two of the air ducts (3), and the air flow being directed perpendicular thereto by the third air duct (4), **characterized in that** the air flaps (8) have a shut-off surface (9) in the form of a 90° section of a hollow cylinder.

2. The ventilation device according to claim 1, **characterized in that** the cross-section of at least one of the air flaps (8) is designed in an arc shape perpendicular to the pivot axis (S).

3. The ventilation device according to claim 2, **characterized in that** the cross-section of the air flap (8) is designed in a circular arc shape perpendicular to the pivot axis (S).

4. A ventilation device according to any one of the preceding claims, **characterized in that** at least one of the air flaps (8) has at least one edge (11, 21) extending outward.

5. The ventilation device according to claim 4, **characterized in that** the edge (11, 21) extends outward in the radial direction.

6. The ventilation device according to claim 4 or 5, **characterized in that** the edge (11, 21) is provided on the side directed toward the second air flap (8).

7. A ventilation device according to any one of the preceding claims, **characterized in that** the ventilation device (1) is designed laterally inverted with respect to a center plane.

8. A ventilation device according to any one of the preceding claims, **characterized in that** the filter length (L) corresponds to the length of both air flaps (8) on the side adjacent to the filter (5) in the position in which the two air flaps (8) are arranged the furthest apart from each other, plus the distance of the pivot axes (S) of the two air flaps (8) from each other +/- 10%, in particular +/- 5%.

9. A ventilation device according to any one of the preceding claims, **characterized in that** the third air duct (4), which is oriented perpendicular to the two other air ducts (3), is a fresh air duct, and the two other air ducts (3) are recirculation ducts, or that the third air duct, which is oriented perpendicular to the two other air ducts, is a recirculation duct and the two other air ducts (3) are fresh air ducts.

10. A ventilation device according to any one of the preceding claims, **characterized in that** a cross-member (22) running in parallel to the pivot axes (S) and in the center plane between the same, or an intermediate piece (32) is provided for supporting an edge (11, 21) of the air flap (8).

11. A ventilation device according to any one of the preceding claims, **characterized in that** at least one of the air flaps (8) is designed both laterally inverted with respect to the center transversal plane and perpendicular to a center plane extending along the pivot axis (S).

## Revendications

1. Dispositif de ventilation comprenant au moins une soufflante d'aspiration (6), au moins deux conduits d'air (3, 4) régulés par au moins un volet d'air commun (8), conduits d'air à travers lesquels de l'air, en particulier de l'air frais et / ou de l'air ambiant, peut parvenir à la soufflante d'aspiration (6), et au moins un filtre (5) disposé entre le volet d'air (8) et la soufflante d'aspiration (6), où il est prévu deux volets d'air (8) dont les axes de pivotement (S) sont disposés en étant parallèles l'un à l'autre et adjacents, et parallèles à la surface d'entrée d'air du filtre (5), où les volets d'air (8), à partir de leurs axes de pivotement (S), s'étendent au moins partiellement en direction des conduits d'air (3, 4), et les deux volets d'air (8) régulent les flux d'air à travers trois conduits d'air (3, 4), où l'écoulement de l'air est dirigé à travers deux des conduits d'air (3), en sens inverse l'un par rapport à l'autre, et l'écoulement de l'air à travers le troisième des conduits d'air (4) est dirigé perpendiculairement à ce conduit,
**caractérisé en ce que** les volets d'air (8) présentent une surface d'obturation (9) sous la forme d'une partie, à 90°, d'un cylindre creux.

2. Dispositif de ventilation selon la revendication 1, **caractérisé en ce qu'**au moins l'un des volets d'air (8), dans la section perpendiculaire à l'axe de pivotement (S), est configuré de façon arquée.

3. Dispositif de ventilation selon la revendication 2, **caractérisé en ce que** le volet d'air (8), dans la section perpendiculaire à l'axe de pivotement (S), est configuré en forme d'arc de cercle partiel.

4. Dispositif de ventilation selon l'une quelconque des revendications précédentes, **caractérisé en ce qu'**au moins l'un des volets d'air (8) présente au moins un bord (11, 21) qui s'étend vers l'extérieur.

5. Dispositif de ventilation selon la revendication 4, **caractérisé en ce que** le bord (11, 21) s'étend vers l'extérieur, dans le sens radial.

6. Dispositif de ventilation selon la revendication 4 ou 5, **caractérisé en ce que** le bord (11, 21) est prévu sur le côté qui est tourné vers le deuxième volet d'air (8).

7. Dispositif de ventilation selon l'une quelconque des revendications précédentes, **caractérisé en ce que** le dispositif de ventilation (1) est configuré en étant symétrique par rapport à un plan médian.

8. Dispositif de ventilation selon l'une quelconque des revendications précédentes, **caractérisé en ce que** la longueur de filtre (L) correspond à la longueur des deux volets d'air (8) placés sur le côté où ils sont adjacents au filtre (5), dans la position dans laquelle les deux volets d'air (8) sont disposés en étant le plus espacés l'un de l'autre, plus la distance entre les axes de pivotement (S) des deux volets d'air (8), l'un par rapport à l'autre, avec une tolérance de ± 10 %, en particulier de ± 5 %.

9. Dispositif de ventilation selon l'une quelconque des revendications précédentes, **caractérisé en ce que** le troisième conduit d'air (4), qui est orienté perpendiculairement aux deux autres conduits d'air (3), est un conduit d'air frais, et les deux autres conduits d'air (3) sont des conduits d'air ambiant, ou bien **en ce que** le troisième conduit d'air, qui est orienté perpendiculairement aux deux autres conduits d'air, est un conduit d'air ambiant, et les deux autres conduits d'air (3) sont des conduits d'air frais.

10. Dispositif de ventilation selon l'une quelconque des revendications précédentes, **caractérisé en ce qu'**il est prévu une nervure (22) s'étendant parallèlement aux axes de pivotement (S) et dans le plan médian situé entre ces axes de pivotement, ou bien une pièce intermédiaire (32) permettant à un bord (11, 21) du volet d'air (8) de venir en appui.

11. Dispositif de ventilation selon l'une quelconque des revendications précédentes, **caractérisé en ce qu'**au moins l'un des volets d'air (8) est configuré aussi bien de façon symétrique par rapport au plan transversal médian, que de façon perpendiculaire à un plan médian qui s'étend le long de l'axe de pivotement (S).
